# EUROPEAN PATENT SPECIFICATION

(11) **EP 4 365 555 B1**
(45) Date of publication and mention of the grant of the patent: **14.05.2025**
(21) Application number: 22205191.4
(22) Date of filing: 03.11.2022
(51) Int. Cl.: G01D 4/00, H04L 9/40, H04W 12/00, H04W 12/041, H04W 12/0431, H04W 12/033

(54) **METER READING DEVICE**
MESSGERÄTLESEGERÄT
DISPOSITIF DE LECTURE DE COMPTEUR

(43) Date of publication of application: 08.05.2024
(73) Proprietor: Kamstrup A/S, 8660 Skanderborg (DK)
(72) Inventor: Hørdum, Jens, 8660 Skanderborg (DK)
(74) Representative: Plougmann Vingtoft a/s

(56) References cited:
- WO-A2-2011/002622
- WO-A2-2013/076719
- GB-A- 2 482 326

## Description

### FIELD OF THE INVENTION

The present invention relates to the technical field of meter reading devices and especially to the field of meter reading devices for enabling consumer access to utility meter data via a mobile phone.

### BACKGROUND OF THE INVENTION

Automatic meter reading (AMR) systems and advanced meter infrastructure (AMI) systems, in the following commonly referred to as meter reading systems, are generally known in the art. Utility companies uses such meter reading systems to read and monitor customer meters remotely, typically using radio frequency (RF) communication. Meter reading systems increase the efficiency and accuracy of collecting readings and managing customer billing. AMR systems generally uses a mobile RF communication network for collecting meter readings and data, whereas AMI system uses a fixed RF communication network, such as a Low Power Wide Area Network (LPWAN). Especially in AMI systems there may be multiple intermediate collectors located throughout a larger geographic area, each collector in turn communicating with a head end system. Establishing such meter reading systems requires large investments in communication infrastructure and/or man power for the utilities. Further these meter reading systems does not provide a direct access to the meter reading data for the consumer, since data is send to the utility head end system and not directly to the consumer. Thus, the consumer needs to access data through a utility portal or utility connected application, with the result that the data available to the consumer are old e.g. relating to the consumption of the previous day.

As an alternative to the above mentioned dedicated meter reading infrastructures are general purpose Internet of Things (IoT) infrastructures, such as cellular infrastructures supporting LTE cat. M1 or LTE cat. NB1. Such IoT infrastructures are provide by telecommunication companies and requires payment of subscription fees and the use cellular communication technologies which is associated with license fees, whereby the cost associated with the use of these technologies raises significantly. Further, the power consumption in the utility meter for transmission of data via e.g. cellular communication network is very high, especially for battery operated meters this is problematic and reduces lifetime of the utility meter significantly. Thus, the data latency in such system data is normally very high since data is only transmitted a few times each day to save energy.

An important design criterion for meter reading systems is to protect the consumption data from unauthorized access whereby the privacy of the consumer would be compromised. Further, the integrity and authenticity of the consumption data send to the utility for billing purposes must be protected to avoid fraud e.g. by manipulation of the data. To ensure this, data security mechanisms is required to protect the consumption data during transmission from the utility meter to the head end system. This includes the use of data encryption and safe handling of data encryption keys, which complicates the process of granting consumer access directly to the utility meter and the risk of compromising data security in the process is high.

GB 2 482 326 A discloses an apparatus for managing transfer of a utility usage meter reading from a utility meter to a utility provider. Information identifying a smart meter is received from a user device and a utility usage associated is received from the smart meter. The information received is stored when the information is successfully verified. Verifying comprises determining if there is an association between the smart meter and the user device

WO 2011/002622 A2 discloses a method for providing a mobile meter reader with an authorization that may be used to establish a secure session with a meter. The method includes issuing a request for authorization to access the meter from the mobile meter reader. If the mobile meter reader maintains sufficient rights, an authorization having an encoded digital signature is generated at a host computer system and provided to the mobile meter reader. Then the method formulates and transmits an authorization command to the meter having the encoded digital signature that was generated by the host computing system.

WO 2013/076719 A2 discloses a method for polling of meter data measured by a plurality of utility measuring devices and transmitted over a wireless local area network. The method comprises encryption and decryption of the meter data and storing the data in an encrypted or decrypted format. Further, the method discloses transfer of encryption keys.

### OBJECT OF THE INVENTION

It is an object of the present invention to provide a simple, cost efficient and secure alternative to the known meter reading systems. In particular, it may be seen as an object of the present invention to provide a meter reading device and a method for meter reading which require installation of less dedicated meter reading infrastructure, reduces costs, minimizes energy consumption, provides consumer access to updated meter data and provides utility access to billing data without compromising data security and privacy.

### SUMMARY OF THE INVENTION

Thus, the above described object and several other objects are intended to be obtained in a first aspect of the invention by providing a meter reading device comprising: a first communication interface for wireless communication with a utility meter; a second communication interface for wireless communication with a mobile phone; a microcontroller for controlling the communication interfaces and for processing data packets; and a key extraction module, the meter reading device being configured to: receive from the utility meter via the first communication interface, a data packet comprising a payload being at least partly encrypted by use of a data encryption key; and receive from the mobile phone via the second communication interface an access code comprising the data encryption key embedded in the access code, and extract from the access code the data encryption key by inputting the access code to the key extraction module; and decrypt the payload of the received data packet using the data encryption key extracted from the access code; and establish an encrypted connection to the mobile phone via the second communication interface and send at least a part of the decrypted payload to the mobile phone via the encrypted connection and send the received data packet including the encrypted payload to the mobile phone via the second communication interface.

The meter reading device according to all aspects of the invention is especially advantageous because it enables the use of an existing communication infrastructure provided by a mobile phone, such as a smart phone, for transferring consumption data to a consumer as well as to a utility company. The decrypted payload comprising consumption data is send from the meter reading device to the mobile phone via the encrypted connection. In the mobile phone the decrypted payload comprising consumption data may be displayed to the consumer. Further, the received data packet including the still encrypted payload comprising consumption data is additionally sent from the meter reading device to the mobile phone via the second communication interface and optionally also via the encrypted connection. The received data packet, which is still encrypted, may be forwarded by the mobile phone to a head end system of a utility company for billing purposes. Thus, the meter reading device provides a dual data stream where the first data stream provides the decrypted payload which may be accessed by the consumer being in possession of the mobile phone and the second data stream provides the still encrypted data packet whereby an end to end encrypted service between the utility meter and the head end system / utility company is established,

The dual data stream is especially advantageous because it separates the data stream for the consumer from the data stream for billing purposes of the utility company. Hereby the high security end to end encryption for billing data is preserved while at the same time data for the consumer is made available to the consumer and protected by adequate data security mechanisms provided by the encrypted connection of the second communication interface. Thus, the only equipment that need to be installed to establish a secure and energy efficient dual channel meter reading system is the meter reading device.

Receiving the access code with an embedded data encryption key from the mobile phone has the advantage that the meter reading device does not need to be preconfigured with information about the meters to be read or the data encryption key required for decrypting the data. A further advantage is that the data encryption key is only extracted in the meter reading device. Thus, the data encryption key is not available in the mobile phone, this reduces the risk of compromising the data encryption key. The user may request the access code from the utility company by use of the mobile phone and then forward the access code to the meter reading device, where after the access code may be deleted from the mobile phone. It is not required that the mobile phone is able to extract the data encryption key from the access code, since the decryption of data is handled by the meter reading device. In other words, it may be preferred that the mobile phone is not able to extract the data encryption key from the access code

The meter reading device may be a battery operated or mains powered device suitable for wall mounting in a home of a consumer. Since the meter reading device does not use cellular communication there is no need for cellular communication HW or an additional subscription of services from a cellular service provider which is often required for internet of things devices. Further, the power consumption of the meter reading device can be kept low, since it does not need to support cellular communication technologies. Thus, the meter reading device has very low manufacturing and operational costs, since it relies on the cellular communication channel provided by the mobile phone.

The first communication interface for wireless communication may be any communication interface suitable for wireless reading of utility meters such as wireless M-Bus, Zigbee, Zwave or a proprietary communication interface. Preferably the first communication interface is a radio (RF) communication interface. Optionally the first communication interface is a unidirectional communication interface, where data is transmitted from the utility meter, or alternatively the transfer of the data packet via the first communication interface is a unidirectional communication session.

The second communication interface is preferably a communication interface supported by mobile phones such as Bluetooth, Bluetooth LE, UWB or any other suitable wireless communication interface, preferably a radio (RF) communication interface. Preferably the second communication interface is a bidirectional communication interface.

The mobile phone is understood to be any mobile phone or smart phone or cell phone supporting data communication via a cellular communication network and via a second communication interface suitable for communication with the meter reading device. An alternative to a cell phone is a tablet or laptop including a cellular communication interface.

The data packet sent from the utility meter and received by the meter reading device may be any kind of data packet for wireless transmission of consumption data such as a wireless M-Bus data packet. The data packet comprises at least a payload for carrying consumption data. The consumption data carried in the payload may be consumption data registered by a utility meter such as a volume of water in case of a water meter, a volume of gas in case of a gas meter an amount of energy in case of a heat meter or electricity meter. The consumption data may also be other data related to the consumption such as flow rate, power, Voltage, current, temperature or alerts related to abnormal use or state of the utility such as leak, burst, tamper, over or under Voltage, power fail, battery state etc. The payload may be encrypted or at least partly encrypted by use of a data encryption key. Further the data packet may comprise a Message Authentication Code (MAC) such as a CMAC or a CBC MAC for verifying the authenticity of the packet or payload. The packet may also comprise a meter identification or device identification carried in an unencrypted header of the data packet or in the payload of the data packet.

The encrypted connection between the mobile phone and the meter reading device is understood to be a wireless connection for transfer of data protected by cryptographic methods such as encryption. In other word the encrypted connection is a cryptographically secure connection or a connection protected by cryptographic methods. The encrypted connection may be any connection suitable for protecting the privacy of the user by preventing unauthorized access to the data, and especially the payload, transmitted via the connection. The connection may optionally be based on the Transport Layer Security (TLS) protocol, Datagram Transport Layer Security (DTLS) protocol or the Bluetooth security as described in NIST publication SP 800-121 Rev. 2 (January 19. 2022) and the Bluetooth specifications. Establishing an encrypted connection may include exchange of data encryption keys and / or session keys for protection and authentication of the data to be transferred via the connection. Establishing a connection may include a pairing of devices such as a pairing of Bluetooth devices.

Optionally the meter reading device comprises a meter reading device identification. The meter reading device identification may be stored in a memory of the meter reading device and / or printed on an external surface of the meter reading device and read from the meter reading device via one or more of the following optional communication interfaces: Near Field Communication (NFC), Ultra Wide Band (UWB) communication or optical scanning of a bar code or QR code or a simple number printed on the meter reading device. Optionally the meter reading device may be arranged to receive the meter reading device identification or a proof of knowing the meter reading device identification from the mobile phone via the second communication interface and only to establish an encrypted connection to a mobile phone from which the meter reading device identification or a proof of knowing the meter reading device identification of the meter reading device has been received. This has the advantage that only a mobile phone which has been in sufficiently close proximity of the meter reading device to read the meter reading device identification can establish a secure connection to the meter reading device whereby access to consumption data is achieved. Optionally more than one mobile phone may be connected to the meter reading device via an encrypted connection.

Optionally the meter reading device according to the first aspect may be arranged to automatically re-establish the encrypted connection to the mobile phone when the mobile phone re-enters communication range of the meter reading device after having been outside communication range. It is understood that the consumer may bring the mobile phone outside the coverage or communication range of the second communication interface. Thus it is preferable if the encrypted connection is automatically re-established when the mobile phone once again is within communication range of the meter reading device. Optionally the meter reading device may transfer data received during a period of no connection between the meter reading device and the mobile phone to the mobile phone upon re-establishment of the encrypted connection. This has the advantage that the meter reading device collects data required for establishing a complete consumption profile which may be presented to the consumer when the mobile phone re-enters communication range and which also may be forwarded to the utility company.

By sending the decrypted payload of the data packet to the mobile phone via the encrypted connection the consumption data is transferred to the mobile phone. The meter reading device may make a selection of the payload / consumption data to be transferred to the mobile phone. This has the advantage that only consumption data relevant to the consumer is made available in clear text. Since the received data packet including the encrypted payload is send to the mobile phone via the second communication interface all the consumption data may be made available to the utility company if the data packet is forwarded by the mobile phone to a head end system of the utility company. By sending the received data packet including the encrypted payload to the mobile phone is understood that the data packet and at least the elements of the data packet required for decrypting and decoding the data packet is send to the mobile phone. Optionally the meter reading device may be configured to send the received data packet including the encrypted payload to the mobile phone via the encrypted connection established via the second communication interface.

The meter reading device is understood to provide two data streams where the first data stream is provided by sending at least a part of the decrypted payload to the mobile phone via the encrypted connection and the second data stream is provided by sending the received data packet including the encrypted payload to the mobile phone via the second communication interface, where the first data of the first data stream is protected by the encrypted connection and the second data of the second data stream is protected by the end to end encryption provided by the encrypted payload of the data packet.

The key extraction module may be implemented in the microcontroller of the meter reading device or in a separate HW module or a combination of the two. The key extraction module is arranged to derive the data encryption key from the access code. The meter reading device is arranged to extract the data encryption from the access code by inputting at least the access code to the key extraction module. optionally the meter reading device according to the first aspect of the invention may further be arranged to extract the data encryption key from the access code by further inputting a meter identification to the key extraction module and to receive a data packet from the utility meter further comprising the meter identification in clear next. Including the meter identification in the extraction of the data encryption key has the advantage that the meter identification is directly connected to the access code. By comprising the meter identification in clear text is understood that the meter identification is included in the data packet in an unencrypted format, preferably in a header of the data packet.

Optionally the meter reading device according to the first aspect of the invention may further comprise a meter reading device identification and the data encryption key is extracted from the access code by further inputting the meter reading device identification to the key extraction module. Including the meter reading device identification in the extraction of the data encryption key has the advantage that the access code is only valid for one specific meter reading device whereby it is assured that only one specific meter reading device is authorized to extract the data encryption key based on a specific access code.

The access code comprising the data encryption key embedded in the access code is to be understood as the access code comprises the data encryption key or in other words an access code comprising an embedded data encryption key or in other words an access code wherein a data encryption key is embedded. The access code carries the data encryption key or at least carries information which in combination with the meter identification and/or meter reading device identification can be used for extracting the data encryption key by use of the key extraction module.

The meter reading device according to the first aspect of the invention may be arranged to receive an access code generated using a cryptographic method such that the data encryption key is embedded in the access code in an encrypted format and to extract the data encryption key from the access code using a cryptographic method such that the extracted data encryption key is in a decrypted format. In this context the access code is an access code wherein an encrypted data encryption key is embedded. Generating the access code using a cryptographic method has the advantage that the data encryption key is protected against unauthorized access. Further the meter reading device may additionally comprise an access code generation key which is additionally inputted to the key extraction module for extracting the data encryption key. It is to be understood that the access code generation key is also used for generating the access code.

The access code may be a string of characters or bytes such as preferably at least 8 characters / bytes or more preferably at least 16 characters / bytes or even more preferably at least 32 characters / bytes. The access code may even have a length of at least 128 or 256 characters / bytes.

The data encryption key and/or the access code generation keys may be symmetrical keys or alternatively asymmetrical keys. Symmetrical keys has the advantage of low cost and low energy consuming encryption and decryption operations. Optionally decrypting the payload of the data packet is done using the AES algorithm as specified in FIPS 197 (November 26, 2001)

The meter reading device according to the first aspect of the invention may further comprise a storage such as a non-volatile memory area, and may further be arranged to store the received encrypted data packets and / or the decrypted payload in the storage and to send at least part of the stored data to the mobile phone when it is within communication range. Storing data has the advantage that the meter reading device may collect data required for establishing a complete consumption profile which may be transferred to the mobile phone at a later point in time. Further the meter reading device according to the first aspect of the invention may be arranged to scan for utility meters via the first communication interface and to store data packets received from one or more utility meters if, or optionally only if, the payload from the one or more utility meters is successfully decrypted by use of the data encryption key. Storing data packets from meters which can be successfully decoded has the advantage that the access code is determining which data packets are to be stored.

Further, the meter reading device according to the first aspect of the invention may be arranged to store the received encrypted data packets from one or more utility meters for which the payload cannot be successfully decrypted, and optionally forward these data packets to the mobile phone. This has the advantage that the meter reading device provides end to end encrypted data from utility meters within communication range without compromising the privacy of the consumers related to those utility meters. Optionally the meter reading device is arranged to send the received encrypted data packets from one or more utility meters for which the payload cannot be successfully decrypted to the mobile phone via the second communication interface and optionally using the encrypted connection.

Optionally the storage for storing at least the decrypted payload is a secured storage where the data is stored in an encrypted form or in an encrypted memory area. This has the advantage that the consumption data cannot be extracted from the meter reading device by an unauthorised person.

The optional elements and advantages described above for the meter reading device according to the first aspect of the invention does also apply to the second aspect of the invention as disclosed below.

In a second aspect of the invention is provided a method for reading a utility meter in a meter reading system comprising: a utility meter; a meter reading device; a mobile phone; and a head end system, where the meter reading device is arranged for wireless communication with the utility meter via a first communication interface and for wireless communication with the mobile phone via a second communication interface and where the mobile phone is arranged for communication with the head end system via cellular communication or Wi-Fi, the method comprising the steps of: sending from the head end system to the mobile phone an access code comprising an embedded data encryption key; sending the access code from the mobile phone to the meter reading device via the second communication interface; receiving in the meter reading device from the utility meter via the first communication interface, a data packet comprising a payload being at least partly encrypted by use of the data encryption key; extracting in the meter reading device the data encryption key from the access code; decrypting in the meter reading device the payload of the received data packet using the data encryption key extracted from the access code; establishing an encrypted connection between the meter reading device and the mobile phone via the second communication interface; sending at least a part of the decrypted payload from the meter reading device to the mobile phone via the encrypted connection; sending the data packet including the encrypted payload received in the meter reading device from the meter reading device to the mobile phone via the second communication interface; displaying on a display of the mobile phone the decrypted payload data received from the meter reading device; and sending from the mobile phone to the head end system via cellular communication or Wi-Fi the encrypted data packet received from the meter reading device.

The second aspect provides the same advantages as the first aspect of the invention and additionally in the second aspect the relation to the head end system is included. The head end system is to be under stood as one or more system, servers or web interfaces provide by the utility company or another service provider. The head ends system may be the receiver of consumption data for billing and analytics purposes and / or a server or portal for requesting access codes and verify that access codes are forwarded to users with the required authorisation to access data. The mobile phone receives the access code from the head end system and forwards it to the meter reading device, thus the mobile phone does not need to be in possession of the access code after it has been forwarded to the meter reading device. Thus, optionally the mobile phone deletes the access code from it memory after that it has been forwarded to the meter reading device. This has the advantage that the access code is not stored in the mobile phone which is connected to the internet and thus susceptible to hacking and other security breaches. Preferably the mobile phone communicates with the head end system via the internet which is accessed either via Wi-Fi, public cellular network i.e. cellular communication or another access technology.

Preferably the mobile phone is arranged to display at least a part of the decrypted payload data on a display of the mobile phone for providing information about the utility consumption to the consumer.

Optionally the method according to the second aspect of the invention further comprises the steps of: sending from the mobile phone to the head end system a request for an access code via a user application in the mobile phone; generating in the head end system the access code based on at least the data encryption key; and receiving in the mobile phone the access code from the head end system via a secondary channel. The request for the access code may be sent to the head end system either via Wi-Fi or via the cellular communication network. The secondary channel may be one of: an SMS, an E-mail, a phone call or a mail via postal service. Receiving the access code from the head end system via a secondary channel has the effect of increasing the security by a two factor authentication of the user. The phone number, email address or mail address of the user may be provided to the head end system by the utility company.

Optionally in the method according to the second aspect of the invention the data encryption key is extracted from the access code in the meter reading device by inputting the access code and at least a meter identification into a key extraction module and the data packet further comprises a meter identification in clear text.

Optionally in the method according to the second aspect of the invention the data encryption key is extracted from the access code in the meter reading device by inputting at least the access code and a meter reading device identification into a key extraction module, the method further comprising the steps of: reading with the mobile phone the meter reading device identification from the meter reading device either by an optical interface such as a bar code or a QR code or via NFC; including the meter reading device identification in the request for the access code generating in the head end system the access code based at least on the data encryption key and the meter reading device identification. The meter reading device identification is preferably not transmitted via the first communication interface. The QR code or bar code may be scanned with a camera of the mobile phone. Reading the meter reading device identification with an optical interface or NFC interface or alternatively a UWB interface has the advantage that such short distance communication technologies are not very susceptible to eavesdropping, thus including the meter reading device in the generation of the access code increases security and the protection from unauthorised access to the consumption data significantly.

Optionally in the method according to the second aspect of the invention the access code is generated using cryptographic methods such that the data encryption key is embedded in the access code in an encrypted format and the data encryption key is extracted from the access code using cryptographic methods such that the extracted data encryption key is in a decrypted format.

The individual aspects of the present invention may each be combined with any of the other aspects. These and other aspects of the invention will be apparent from the following description with reference to the described embodiments.

### BRIEF DESCRIPTION OF THE FIGURES

The meter reading device and method according to the invention will now be described in more detail with regard to the accompanying figures. The figures show one way of implementing the present invention and is not to be construed as being limiting to other possible embodiments falling within the scope of the attached claim set.
Fig. 1 illustrates a schematic example of a meter reading system with a meter reading device, a utility meter, a mobile phone and a head end system;
fig. 2 shows an example of a data packet including a payload and encrypted consumption data;
fig. 3 shows an example of the flow of extracting a data encryption key from an access code and decrypting a payload using the data encryption key;
fig. 4 shows schematically the steps of an example of the disclosed method.

### DETAILED DESCRIPTION OF AN EMBODIMENT

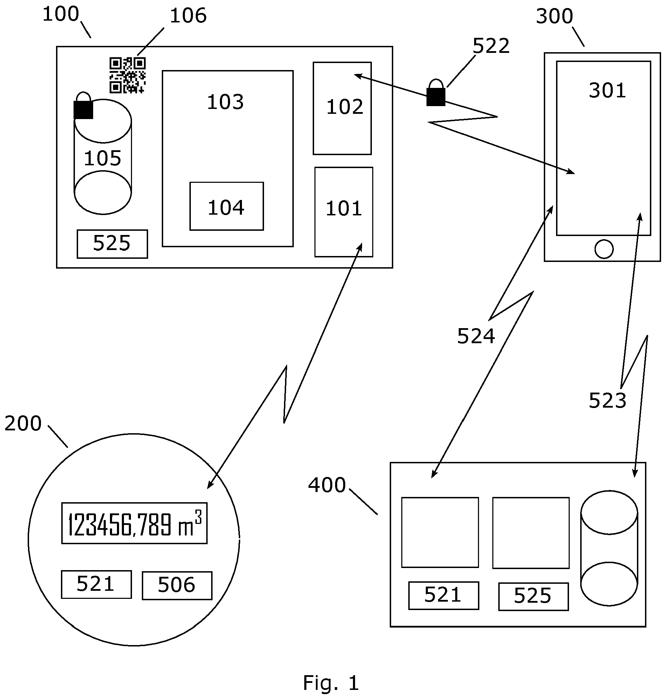

In the following with reference to fig. 1 is described an embodiment of a meter reading device 100. The meter reading device 100 is installed in a private home at a consumer of a utility and is arranged to collect consumption data from a utility meter 200 installed in the home and arranged to measure the consumption of a utility such as water, gas, district heating energy or electricity. The user receives the meter reading device 100 from the utility company or another provider and installs it in the home. By use of a mobile phone 300 with a dedicated user application the consumer requests an access code 520 from the utility. The utility sends the access code 520 via a secondary channel 523, such as an SMS to the mobile phone 300 which forwards it to the meter reading device 100 via a second communication interface 102, such as a Bluetooth communication interface. The meter reading device 100 receives the access code 520 and extracts a data encryption key 521 from the access code. The meter reading device receives data packets 500 from the utility meter 200 via a first communication interface 101 for wireless communication, such as a wireless M-Bus (wM-Bus) communication interface. The data packets 500 carry consumption data 503 in an encrypted payload 501 of the data packet 500. The data encryption key 521 is now used in the meter reading device 100 for decrypting data packets 500 received from the utility meter 200. The Meter reading device 100 stores the received data packets 500 with an encrypted payload 501 as well as the decrypted payload 502. When the mobile phone 300 is within communication range of the meter reading device 100, the meter reading device will send the received data packets 500 with an encrypted payload 501 as well as the decrypted payload 502 to the mobile phone 300 via the second communication interface 102. The mobile phone 300 will present the decrypted payload 502 to the consumer on a display 301 of the mobile phone and forward the received data packets 500 with an encrypted payload 501 for billing purposes to a head end system 400 controlled by the utility company. Thus, effectively one meter reading device establishes two data streams, a first data stream for consumer information and a second data stream for the utility company. The first data stream of the decrypted payload 502 is dedicated for informing the consumer of the energy consumption and the second data stream of end to end encrypted received data packets 500 with an encrypted payload 501 is dedicated for billing purposes of the utility company. Thus, a low cost secure meter reading system is provide by the meter reading device 100 in conjunction with the mobile phone 300 of the consumer and the head end system 400 of the utility company.

The meter reading device 100 of fig. 1 is a battery operated or mains operated device for being wall mounted in a home of a consumer. The meter reading device 100 comprises a first communication interface 101 for wireless communication with a utility meter 200. The first communication interface 101 supports wireless M-Bus communication but may alternatively support Zigbee, Zwave, Bluetooth LE, proprietary or other communication technologies suitable for communicating directly with the consumption meter. The meter reading device 100 further comprises a second communication interface 102 for wireless communication with a mobile phone 300. The second communication interface 102 preferably supports a communication technology supported by commercial available mobile phones such as Bluetooth, Bluetooth LE, Wi-Fi or UWB but other communication technologies may be used. The meter reading device 100 has an integrated or external antenna (not shown) for each of the first and second communication interfaces or a shared antenna for the two communication interfaces. The meter reading device 100 comprises a microcontroller 103 for controlling the communication interfaces 101, 102 and for handling and decoding the received data packets 500. Further, the microcontroller 103 is arranged to control storage of data and forwarding of data to the mobile phone 300. The meter reading device further comprises a key extraction module 104 for extracting the data encryption key from the access code. The key extraction module is 104 implemented in the microcontroller 103 but may alternatively be implemented in a separate HW component. The meter reading device further comprises a storage 105 for storing the received encrypted data packets 500 and the decrypted payload 502. The storage 105 is a volatile or non-volatile memory such as RAM, EEPROM or FLASH memory. On the front of the meter reading device is arranged a QR code for reading a Meter reading device identification 106 by an optical interface such as a camera of the mobile phone 300. The Meter reading device identification 106 is further stored in a memory of the meter reading device which is accessible to the microcontroller.

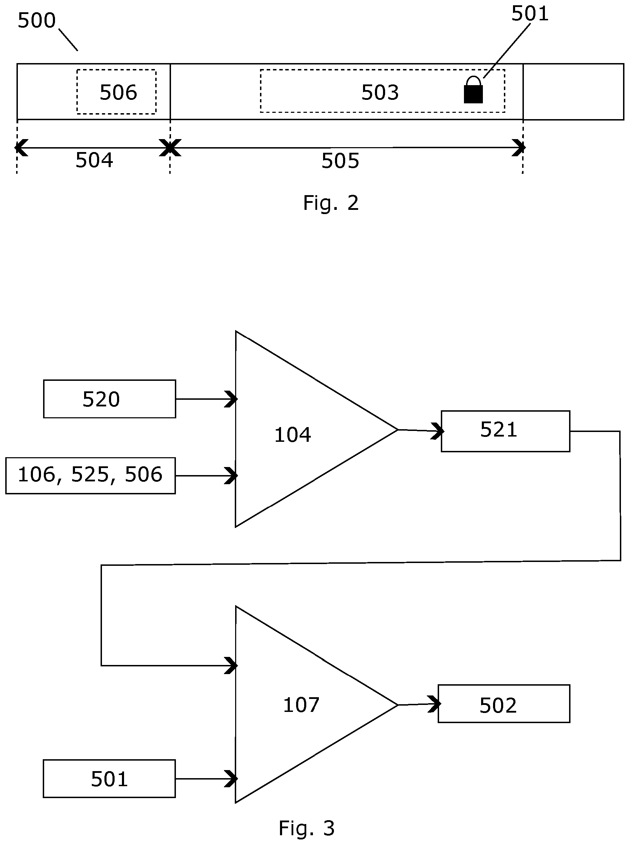

The meter reading device 100 receives data packets 500 from the utility meter via the first communication interface 101. To reduce power consumption the meter reading device is arranged to use synchronized communication according to the wireless M-Bus standard EN13757-4 when communicating with the utility meter 200. The data packets 500 shown in fig. 2 includes a header 504 with a meter identification 506 and payload 505 carrying the consumption data 503. The payload is a at least partly encrypted payload 501 as described in EN13757-3 and EN13757-7. When the data packet is received in the meter reading device the meter reading device decrypts the payload using a data encryption key 521 whereby the decrypted payload 502 becomes available in clear text. The decrypted payload 502 includes consumption data. Decryption is performed using an AES algorithm or another decryption algorithm 107 according to which the payload is encrypted as illustrated in fig. 3. Decryption of the payload is also described in EN13757-3 and EN13757-7. The encryption algorithm may be a HW or SW implemented algorithm.

The meter reading device 100 is arranged to store the decrypted payload 502 or at least part of it in the storage 105. The received data packet 500 including the encrypted payload 501 is also stored in the storage 105. A part of the storage is a secure storage where at least the decrypted payload 502 is stored in a encrypted memory area whereby the decrypted payload is protected from unauthorised access e.g. by tampering with the meter reading device. The data encryption key 521 is also stored in the secure storage. The secure storage may be implemented by use of a commercial available secure memory chip.

The meter reading device 100 is arranged to receive the data encryption key 521 from the mobile phone 300 via the second communication interface 102. The data encryption key 521 is embedded in an access code 520 transferred from the mobile phone to the meter reading device. The access code 520 comprises the data encryption key 521 in an encrypted format such that the data encryption key cannot be directly read from the access code. As illustrated in fig. 3 the data encryption key is extracted from the access code by inputting the access code to the key extraction module 104 of the meter reading device 100. The key extraction module uses the AES algorithm to extract the data encryption key 521 in a decrypted form from the access code 520. To increase security one or more of the following optional elements may additionally be inputted to the key extraction module: a utility meter identification 506, a Meter reading device identification 106, a pre-shared secret 525, a unique consumer identifier such as a telephone number, an e-mail address a social security number. The one or more optional elements are known to the meter reading device or transferred to the meter reading device via the mobile phone and known to the head end system which is arranged to generate the access code. The optional elements may be used as key material or initialisation vectors in the AES algorithm or be encrypted in the AES algorithm along with the data encryption key 521. The use of the AES algorithm is described in details in FIPS 197 (November 26, 2001), NIST Special Publication 800-38A (2001) and FIPS 140-2.

The access code is generated in the head end system using the same algorithms and elements as described above with respect to the key extraction module. The access code is generated by inputting the data encryption key 521 to the AES algorithm so that it is encrypted by the AES algorithm. Further, the following optional elements may be used as key material or initialisation vectors in the AES algorithm or be encrypted in the AES algorithm along with the data encryption key 521. The optional elements are one or more of: a utility meter identification 506, a Meter reading device identification 106, a pre-shared secret 525, a unique consumer identifier such as a telephone number, an e-mail address or a social security number. The access code 521 is the output from the AES algorithm. As an alternative to the AES algorithm in the embodiments above any symmetric or asymmetric data encryption algorithm may be used such as DES, 3DES, IDEA, Serpent, Twofish RC4, RC5, RC6, RSA, ECC, DSA.

The meter reading device 100 establishes an encrypted connection 522 to the mobile phone 300 via the second communication interface 102. The second communication interface is a Bluetooth or Bluetooth LE communication interface. The encrypted connection 522 is established using the data security mechanisms available in the Bluetooth standard. Establishing the encrypted connection and / or Bluetooth connection is initiated from the mobile phone 300 via a user application. When the Bluetooth connection has first been established the meter reading device 100 and the mobile phone 300 are configured to re-establish the connection automatically each time the mobile phone re-enters communication range with the meter reading device.

The meter reading device 100 will send the decrypted payload 502 and the received data packet 500 including the encrypted payload to the mobile phone 300 via the encrypted connection 522 established via the second communication interface 102. When the mobile phone re-enters communication range of the meter reding device the meter reding device will forward data stored while outside communication range to the mobile phone.

More than one mobile phone 300 may connect to the meter reading device and establish an encrypted connection 522 to the mobile phone 300 via the second communication interface 102.

When establishing the encrypted connection 522 the mobile phone 300 may read a meter reading device identification 106 from the meter reading device. The meter reading device identification 106 may be read from the meter reading device 100 via Near Field Communication (NFC), RFID, UWB or optical scanning of a bar code or QR or a simple number on the meter reading device 100 using the camera of the mobile phone 300. To increase security the meter reading device 100 may only accept establishing a encrypted connection 522 to a mobile phone 300 which knows the meter reading device identification 106 provides a proof of this, e.g. by sending the meter reading device identification 106 to the meter reading device 100.

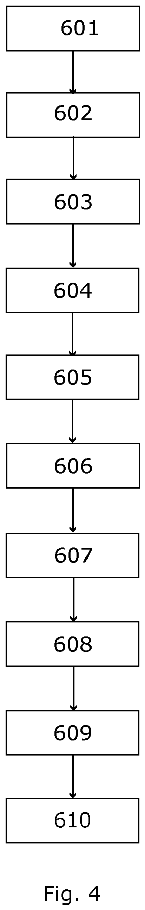

In the following with reference to fig. 1 and fig. 4 is described an embodiment of a meter reading system and a method for reading a utility meter 200 in a meter reading system. The meter reading system comprises a utility meter 200 and a meter reading device 100 as described in the first embodiment, a mobile phone 300 and a head end system 400.

The utility meter 200 may be any utility meter such as a water meter, a gas meter, a district heating meter or an electricity meter. The utility meter comprises a data encryption key 521 for encrypting the payload 505 of the transmitted data packets 500. The data encryption key 521 may be programmed / configured in the utility meter 200 during manufacturing or when commissioning the utility meter. The data encryption key 521 is known to the head end system 400. The utility meter transmits data packets according to the wM-Bus standard EN13757 which is very effective for meter reading and supports energy effective data transmission. Saving energy associated with data transmission is very relevant for battery operated meters such as water, gas and district heating meters.

The mobile phone 300 is preferably a mobile phone controlled by the consumer. The mobile phone 300 supports common communication interfaces for wireless communication such Bluetooth, Bluetooth LE, Wi-Fi and cellular communication. A special user application designed for interfacing the meter reading device 100 via Bluetooth, i.e. a Bluetooth connection via the second communication interface is installed on the mobile phone. The user application is further configured for displaying consumption data 503 on a display 301 of the mobile phone 300. The user application is downloaded from the utility or another provider such as App Store of Google play store and installed on the mobile phone 300. The user application may have an interface for requesting the access code 520 at the head end system 400 or at another interface of the utility company and it is designed for forwarding the access code 520 to the meter reading device 100 via the second communication interface 102. The user application is designed for receiving data from the meter reading device and displaying decrypted consumption data 503 for the consumer / user of the mobile phone. Further the user application is designed for sending the encrypted data packet 500 received from the meter reading device 100 to the head end system 400 via the cellular communication interface or alternatively via Wi-Fi.

The head end system 400 is one or more systems or cloud solutions on one or more servers. The head end system 400 is responsible for handling of consumption data 503 after they have been delivered to the head end system, handling of encryption keys 521 and delegation of authorization to users and distribution of data encryption keys 521. The head end system 400 may be separated in different systems / servers / solutions to enhance security. The head end system is controlled by the utility company or another service provider.

The method for reading a utility meter includes multiple steps, some of which are optional. In a step 601 the access code 520 is send to the mobile phone 300 from the head end system 400 or the utility company. The access code 520 comprises an embedded data encryption key 521 and is generated as described above in relation to the first embodiment. In an optional step 601a, a request for an access code 520 is send from the mobile phone 300 to the head end system 400 or utility company via the user application in the mobile phone 300. The request for the access code 520 may be initiated by a user action. In an optional step 601b, the access code 520 is generated in the head end system 400 or at the utility company based on at least the data encryption key 521. In an optional step 601c, the mobile phone 300 receives the access code 520 from the head end system 400 via a secondary channel 523. The access code 520 may be sent via the internet and received in the mobile phone via the cellular network interface or via a Wi-Fi connection 524, however, using one of the following technologies / methods for the secondary channel 523, such as an SMS, an E-mail, a phone call (or a mail via postal service) will improve security. The secondary channel 523 may include a step or action of a user entering or copying the received access code into the user application.

In a further step 602 the access code 520 is send from the mobile phone 300 to the meter reading device 100 via the second communication interface 102 which is a Bluetooth communication interface, preferably Bluetooth LE. A Bluetooth connection is established between the mobile phone 300 and the meter reading device 100. The access code 520 may be sent via an encrypted connection 522 established via the second communication interface 102 in step 606.

In a further step 603 the meter reading device 100 receives a data packet 500 from a utility meter 200 via the first communication interface 101. The data packet 500 comprises a payload 505 which is at least partly encrypted by use of the data encryption key 521. The meter reading device 100 optionally stores the received encrypted data packet 500 in a storage 105 which is optionally a secure storage 105.

In a further step 604 the meter reading device extracts the data encryption key 521 from the access code 520 by use of the key extraction module 104 as described in relation to the embodiment of the meter reading device above. The meter reading device 100 optionally stores the extracted data encryption key and / or the access code in a secure storage 105.

Especially in step 601b the access code 520 may be generated using cryptographic methods such that the data encryption key 521 is embedded in the access code 520 in an encrypted format and the data encryption key 521 is extracted from the access code in step 604 using cryptographic methods such that the extracted data encryption key 521 is in a decrypted format. Several elements may be inputted to the algorithm generating the access code 520 and into the key extraction module 104 to increase security. Especially, inputting a Meter reading device identification 106 read from the meter reading device by a short range channel will increase security. A short range channel should be an interface supported by commercial available mobile phones such a Near Field Communication (NFC), RFID, UWB or optical scanning of a bar code or QR or a simple number on the meter reading device 100 using the camera of the mobile phone 300. The user application in the mobile phone 300 can access these interfaces directly whereby the Meter reading device identification 106 is easily read by the mobile phone and transferred to the user application and further on the head end system 400. The transfer of the Meter reading device identification 106 to the head end system 400 is done via a secured channel such as a TLS connection over Wi-Fi or cellular communication 524.

In a further step 605 the meter reading device 100 decrypts the payload 505 of the received data packet 500 using the data encryption key 521 extracted from the access code 520 and optionally stores the decrypted payload 502 in a secure storage 105.

In a further step 606 the meter reading device establishes an encrypted connection 522 between the meter reading device 100 and the mobile phone 300 via the second communication interface 102 which is a Bluetooth communication interface, preferably Bluetooth LE. The encrypted connection 522 is established using the data security mechanisms available in the Bluetooth standard. When the Bluetooth connection has first been established the meter reading device 100 and the mobile phone 300 are configured to re-establish the connection automatically each time the mobile phone 300 re-enters communication range with the meter reading device 100.

In a further step 607 the meter reading device 100 sends at least a part of the decrypted payload 502 from the meter reading device 100 to the mobile phone 300 via the encrypted connection 522 established via the second communication interface in step 606.

In a further step 608 the meter reading device 100 sends the data packet 500 including the encrypted payload 501, 505 received in the meter reading device from the meter reading device to the mobile phone 300 via the second communication interface 102. The data packet 500 including the encrypted payload 501 may be sent via the connection established din step 602 or the encrypted connection 522 in step 606. It is to be understood that the connection in step 602 and 606 may be the one and same encrypted connection or may be two connections.

In a further step 609 the decrypted payload data received by the mobile phone 300 from the meter reading device 100 is displayed on a display 301 of the mobile phone. The decrypted payload 502 includes consumption data 503 and alerts suitable for consumer information. Thus, the consumer will be able to monitor the consumption and the state of the utility installation via the user application on the mobile phone 300.

In a further step 610 the encrypted data packet 500 received from the meter reading device 100 is send from the mobile phone 300 to the head end system 400 via cellular communication or Wi-Fi 524. The encrypted data packets 500 were encrypted by the utility meter 200 and are forwarded to the head end system 400 whereby an end to end encrypted data stream between the utility meter and the head end system is established.

The utility meter 200 may be any utility meter such as a water meter, a gas meter, a district heating meter.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### Reference signs:

100 Meter reading device
101 First communication interface
102 Second communication interface
103 Microcontroller
104 Key extraction module
105 Storage
106 Meter reading device identification
107 Decryption algorithm
200 Utility meter
300 Mobile phone
301 Display
400 Head end system
500 Data packet
501 Encrypted Payload
502 Decrypted payload
503 Consumption data
504 Header
505 Payload
506 Meter identification
520 Access code
521 Data encryption key
522 Encrypted connection
523 Secondary channel
524 Cellular or Wi-Fi connection
525 Pre-shared secret

## Claims

1. A meter reading device (100) comprising:
- a first communication interface (101) for wireless communication with a utility meter (200);
- a second communication interface (102) for wireless communication with a mobile phone (300);
- a microcontroller (103) for controlling the communication interfaces (101, 102) and for processing data packets (500); and
- a key extraction module (104),
the meter reading device (100) being configured to: receive from the utility meter (200) via the first communication interface (101), a data packet (500) comprising a payload (505) being at least partly encrypted (501) by use of a data encryption key (521); and receive from the mobile phone (300) via the second communication interface (102) an access code (520) comprising the data encryption key (521) embedded in the access code, and extract from the access code (520) the data encryption key (521) by inputting the access code to the key extraction module (104); and decrypt the payload (505) of the received data packet (500) using the data encryption key extracted from the access code; and establish an encrypted connection (522) to the mobile phone (300) via the second communication interface (102) and send at least a part of the decrypted payload (502) to the mobile phone via the encrypted connection (522) and send the received data packet (500) including the encrypted payload to the mobile phone (300) via the second communication interface (102).

2. A meter reading device according to claim 1, further being arranged to automatically re-establish the encrypted connection (522) to the mobile phone (300) when the mobile phone re-enters communication range of the meter reading device (100) after having been outside communication range.

3. A meter reading device according to any of the preceding claims wherein the data encryption key (521) is extracted from the access code (520) by further inputting a meter identification (506) to the key extraction module (104) and wherein the data packet (500) received from the utility meter (200) further comprises the meter identification in clear text.

4. A meter reading device according to any of the preceding claims further comprising a meter reading device identification (106) wherein data encryption key (521) is extracted from the access code (520) by further inputting the meter reading device identification to the key extraction module (104).

5. A meter reading device according to any of the preceding claims wherein the access code (520) is generated using a cryptographic method such that the data encryption key (521) is embedded in the access code (520) in an encrypted format and the data encryption key is extracted from the access code using a cryptographic method such that the extracted data encryption key is in a decrypted format.

6. A meter reading device according to any of the preceding claims, further comprising a storage (105) such as a non-volatile memory area, and further being arranged to store the received encrypted data packets (500) and / or the decrypted payload (502) in the storage and to send at least part of the stored data to the mobile phone (300) when it is within communication range.

7. A meter reading device according to claim 6, further arranged to scan for utility meters (200) via the first communication interface (101) and to store data packets (500) received from one or more utility meters if the payload (505) from the one or more utility meters is successfully decrypted by use of the data encryption key (521).

8. A meter reading device according to any of claims 6-7, further being arranged store the received encrypted data packets (500) from one or more utility meters for which the payload (505) cannot be successfully decrypted.

9. A meter reading device according to any of claims 6-8, where the storage (105) for storing at least the decrypted payload (502) is a secured storage where the data is stored in an encrypted form or in an encrypted memory area.

10. A method for reading a utility meter in a meter reading system comprising: a utility meter (200); a meter reading device (100); a mobile phone (300); and a head end system (400), where the meter reading device (100) is arranged for wireless communication with the utility meter (200) via a first communication interface (101) and for wireless communication with the mobile phone (300) via a second communication interface (102) and where the mobile phone is arranged for communication with the head end system (400) via cellular communication or Wi-Fi (524).
the method comprising the steps of:
- sending from the head end system (400) to the mobile phone (300) an access code (520) comprising an embedded data encryption key (521), (601);
- sending the access code (520) from the mobile phone (300) to the meter reading device (101) via the second communication interface (102), (602);
- receiving in the meter reading device (100) from the utility meter (200) via the first communication interface (101), a data packet (500) comprising a payload (505) being at least partly encrypted by use of the data encryption key (521), (603);
- extracting in the meter reading device (100) the data encryption key (521) from the access code (520), (604);
- decrypting in the meter reading device (100) the payload (505) of the received data packet (500) using the data encryption key extracted from the access code (605);
- establishing an encrypted connection (522) between the meter reading (100) device and the mobile phone (300) via the second communication interface (102), (606);
- sending at least a part of the decrypted payload (502) from the meter reading device (100) to the mobile phone (300) via the encrypted connection (522), (607);
- sending the data packet (500) including the encrypted payload (501) received in the meter reading device (100) from the meter reading device to the mobile phone (300) via the second communication interface (102), (608);
- displaying on a display (301) of the mobile phone (300) the decrypted payload data (502) received from the meter reading device (609); and
- sending from the mobile phone (300) to the head end system (400) via cellular communication or Wi-Fi (524) the encrypted data packet (500) received from the meter reading device (610).

11. A method according to claim 10 further comprising the steps of:
- sending from the mobile phone (300) to the head end system (400) a request for an access code (520) via a user application in the mobile phone;
- generating in the head end system the access code based on at least the data encryption key (521); and
- receiving in the mobile phone (300) the access code (520) from the head end system (400) via a secondary channel (523).

12. A method according to claim 11 wherein the secondary channel (523) is one of: an SMS, an E-mail or a phone call.

13. A method according to any of claims 10-12 wherein the data encryption key (521) is extracted from the access code (520) in the meter reading device (100) by inputting the access code and at least a meter identification (506) into a key extraction module (104) and the data packet (500) further comprises a meter identification (506) in clear text.

14. A method according to claim any of claims 10-13 wherein the data encryption key (521) is extracted from the access code (520) in the meter reading device (100) by inputting at least the access code and a meter reading device identification (106) into a key extraction module (104), the method further comprising the steps of:
- reading with the mobile phone (300) the meter reading device identification (106) from the meter reading device either by an optical interface such as a bar code or a QR code or via NFC;
- including the meter reading device identification in the request for the access code;
- generating in the head end system (400) the access code (520) based at least on the data encryption key (521) and the meter reading device identification (106).

15. A method according to any of claims 10-14 wherein the access code (520) is generated using cryptographic methods such that the data encryption key (521) is embedded in the access code in an encrypted format and the data encryption key is extracted from the access code using cryptographic methods such that the extracted data encryption key is in a decrypted format.

## Patentansprüche

1. Messgerätlesegerät (100), umfassend:
- eine erste Kommunikationsschnittstelle (101) zur drahtlosen Kommunikation mit einem Verbrauchsmessgerät (200);
- eine zweite Kommunikationsschnittstelle (102) zur drahtlosen Kommunikation mit einem Mobiltelefon (300);
- einen Mikrocontroller (103) zum Steuern der Kommunikationsschnittstellen (101, 102) und zum Verarbeiten von Datenpaketen (500); und
- ein Schlüsselextraktionsmodul (104),
wobei das Messgerätlesegerät (100) zu Folgendem konfiguriert ist: Empfangen, von dem Verbrauchsmessgerät (200) über die erste Kommunikationsschnittstelle (101), eines Datenpakets (500), das Nutzdaten (505) umfasst, die unter Verwendung eines Datenverschlüsselungsschlüssels (521) mindestens teilweise verschlüsselt sind (501); und Empfangen, von dem Mobiltelefon (300) über die zweite Kommunikationsschnittstelle (102), eines Zugriffscodes (520), der den Datenverschlüsselungsschlüssel (521) umfasst, der in den Zugriffscode eingebettet ist, und Extrahieren, aus dem Zugriffscode (520), des Datenverschlüsselungsschlüssels (521) durch Eingeben des Zugriffscodes in das Schlüsselextraktionsmodul (104); und Entschlüsseln der Nutzdaten (505) des empfangenen Datenpakets (500) unter Verwendung des aus dem Zugriffscode extrahierten Datenverschlüsselungsschlüssels; und Herstellen einer verschlüsselten Verbindung (522) mit dem Mobiltelefon (300) über die zweite Kommunikationsschnittstelle (102) und Senden mindestens eines Teils der entschlüsselten Nutzdaten (502) über die verschlüsselte Verbindung (522) an das Mobiltelefon und Senden des empfangenen Datenpakets (500), das die verschlüsselten Nutzdaten beinhaltet, über die zweite Kommunikationsschnittstelle (102) an das Mobiltelefon (300).

2. Messgerätlesegerät nach Anspruch 1, ferner angeordnet, um die verschlüsselte Verbindung (522) mit dem Mobiltelefon (300) automatisch wiederherzustellen, wenn das Mobiltelefon erneut in die Kommunikationsreichweite des Messgerätlesegeräts (100) eintritt, nachdem es sich außerhalb der Kommunikationsreichweite befunden hat.

3. Messgerätlesegerät nach einem der vorhergehenden Ansprüche, wobei der Datenverschlüsselungsschlüssel (521) aus dem Zugriffscode (520) extrahiert wird, indem ferner eine Messgerätkennung (506) in das Schlüsselextraktionsmodul (104) eingegeben wird, und wobei das Datenpaket (500), das von dem Verbrauchsmessgerät (200) empfangen wird, ferner die Messgerätkennung in Klartext umfasst.

4. Messgerätlesegerät nach einem der vorhergehenden Ansprüche, ferner umfassend eine Messgerätlesegerätkennung (106), wobei der Datenverschlüsselungsschlüssel (521) aus dem Zugriffscode (520) extrahiert wird, indem die Messgerätlesegerätkennung ferner in das Schlüsselextraktionsmodul (104) eingegeben wird.

5. Messgerätlesegerät nach einem der vorhergehenden Ansprüche, wobei der Zugriffscode (520) unter Verwendung eines kryptographischen Verfahrens erzeugt wird, sodass der Datenverschlüsselungsschlüssel (521) in einem verschlüsselten Format in den Zugriffscode (520) eingebettet wird und der Datenverschlüsselungsschlüssel unter Verwendung eines kryptographischen Verfahrens aus dem Zugriffscode extrahiert wird, sodass der extrahierte Datenverschlüsselungsschlüssel in einem entschlüsselten Format vorliegt.

6. Messgerätlesegerät nach einem der vorhergehenden Ansprüche, ferner umfassend einen Speicher (105), wie etwa einen nichtflüchtigen Speicherbereich, und ferner angeordnet, um die empfangenen verschlüsselten Datenpakete (500) und/oder die entschlüsselten Nutzdaten (502) in dem Speicher zu speichern und mindestens einen Teil der gespeicherten Daten an das Mobiltelefon (300) zu senden, wenn es sich innerhalb der Kommunikationsreichweite befindet.

7. Messgerätlesegerät nach Anspruch 6, ferner angeordnet, um nach Verbrauchsmessgeräten (200) über die erste Kommunikationsschnittstelle (101) zu scannen und um Datenpakete (500) zu speichern, die von einem oder mehreren Verbrauchsmessgeräten empfangen werden, wenn die Nutzdaten (505) von dem einen oder den mehreren Verbrauchsmessgeräten unter Verwendung des Datenverschlüsselungsschlüssels (521) erfolgreich entschlüsselt werden.

8. Messgerätlesegerät nach einem der Ansprüche 6-7, ferner angeordnet zum Speichern der empfangenen verschlüsselten Datenpakete (500) von einem oder mehreren Verbrauchsmessgeräten, für welche die Nutzdaten (505) nicht erfolgreich entschlüsselt werden können.

9. Messgerätlesegerät nach einem der Ansprüche 6-8, wobei der Speicher (105) zum Speichern mindestens der entschlüsselten Nutzdaten (502) ein gesicherter Speicher ist, in dem die Daten in verschlüsselter Form oder in einem verschlüsselten Speicherbereich gespeichert werden.

10. Verfahren zum Lesen eines Verbrauchsmessgeräts in einem Messgerätlesesystem, umfassend:
ein Verbrauchsmessgerät (200); ein Messgerätlesegerät (100); ein Mobiltelefon (300); und ein Head-End-System (400), wobei das Messgerätlesegerät (100) zur drahtlosen Kommunikation mit dem Verbrauchsmessgerät (200) über eine erste Kommunikationsschnittstelle (101) und zur drahtlosen Kommunikation mit dem Mobiltelefon (300) über eine zweite Kommunikationsschnittstelle (102) angeordnet ist und wobei das Mobiltelefon zur Kommunikation mit dem Head-End-System (400) über Mobilfunk oder WLAN (524) angeordnet ist,
wobei das Verfahren die folgenden Schritte umfasst:
- Senden (601) eines Zugriffscodes (520), der einen eingebetteten Datenverschlüsselungsschlüssel (521) umfasst, von dem Head-End-System (400) an das Mobiltelefon (300);
- Senden (602) des Zugriffscodes (520) von dem Mobiltelefon (300) an das Messgerätlesegerät (101) über die zweite Kommunikationsschnittstelle (102);
- Empfangen (603), in dem Messgerätlesegerät (100), von dem Verbrauchsmessgerät (200) über die erste Kommunikationsschnittstelle(101), eines Datenpakets (500), das Nutzdaten (505) umfasst, die mindestens teilweise unter Verwendung des Datenverschlüsselungsschlüssels (521) verschlüsselt sind;
- Extrahieren (604), in dem Messgerätlesegerät (100), des Datenverschlüsselungsschlüssels (521) aus dem Zugriffscode (520);
- Entschlüsseln (605), in dem Messgerätlesegerät (100), der Nutzdaten (505) des empfangenen Datenpakets (500) unter Verwendung des Datenverschlüsselungsschlüssels, der aus dem Zugriffscode extrahiert wurde;
- Aufbauen (606) einer verschlüsselten Verbindung (522) zwischen dem Messgerätlesegerät (100) und dem Mobiltelefon (300) über die zweite Kommunikationsschnittstelle (102);
- Senden (607) mindestens eines Teils der entschlüsselten Nutzdaten (502) von dem Messgerätlesegerät (100) an das Mobiltelefon (300) über die verschlüsselte Verbindung (522);
- Senden (608) des Datenpakets (500), das die verschlüsselten Nutzdaten (501) beinhaltet, die in dem Messgerätlesegerät (100) empfangen werden, von dem Messgerätlesegerät an das Mobiltelefon (300) über die zweite Kommunikationsschnittstelle (102);
- Anzeigen (609), auf einer Anzeige (301) des Mobiltelefons (300), der entschlüsselten Nutzdaten (502), die von dem Messgerätlesegerät empfangen werden; und
- Senden (610), von dem Mobiltelefon(300) über Mobilfunkkommunikation oder WLAN (524) an das Head-End-System (400), des verschlüsselten Datenpakets (500), das von dem Messgerätlesegerät empfangen wurde.

11. Verfahren nach Anspruch 10, ferner umfassend die folgenden Schritte:
- Senden, von dem Mobiltelefon (300) an das Head-End-System (400), einer Anfrage für einen Zugriffscode (520) über eine Benutzeranwendung in dem Mobiltelefon;
- Erzeugen, in dem Head-End-System, des Zugriffscodes auf Grundlage von mindestens dem Datenverschlüsselungsschlüssel (521); und
- Empfangen, in dem Mobiltelefon (300), des Zugriffscodes (520) von dem Head-End-System (400) über einen sekundären Kanal (523).

12. Verfahren nach Anspruch 11, wobei der sekundäre Kanal (523) einer der Folgenden ist: eine SMS, eine E-Mail oder ein Telefonanruf.

13. Verfahren nach einem der Ansprüche 10-12, wobei der Datenverschlüsselungsschlüssel (521) aus dem Zugriffscode (520) in dem Messgerätlesegerät (100) extrahiert wird, indem der Zugriffscode und mindestens eine Messgerätkennung (506) in ein Schlüsselextraktionsmodul (104) eingegeben werden und das Datenpaket (500) ferner eine Messgerätkennung (506) in Klartext umfasst.

14. Verfahren nach einem der Ansprüche 10-13, wobei der Datenverschlüsselungsschlüssel (521) aus dem Zugriffscode (520) in dem Messgerätlesegerät (100) extrahiert wird, indem mindestens der Zugriffscode und eine Messgerätlesegerätkennung (106) in ein Schlüsselextraktionsmodul (104) eingegeben werden, wobei das Verfahren ferner die folgenden Schritte umfasst:
- Lesen, mit dem Mobiltelefon (300), der Messgerätlesegerätkennung (106) von dem Messgerätlesegerät entweder durch eine optische Schnittstelle, wie etwa einen Barcode oder einen QR-Code, oder über NFC;
- Einschließen der Messgerätlesegerätkennung in die Anfrage für den Zugriffscode;
- Erzeugen, in dem Head-End-System (400), des Zugriffscodes (520) mindestens auf Grundlage des Datenverschlüsselungsschlüssels (521) und der Messgerätlesegerätkennung (106).

15. Verfahren nach einem der Ansprüche 10-14, wobei der Zugriffscode (520) unter Verwendung kryptographischer Verfahren erzeugt wird, sodass der Datenverschlüsselungsschlüssel (521) in einem verschlüsselten Format in den Zugriffscode eingebettet wird und der Datenverschlüsselungsschlüssel unter Verwendung kryptographischer Verfahren aus dem Zugriffscode extrahiert wird, sodass der extrahierte Datenverschlüsselungsschlüssel in einem entschlüsselten Format vorliegt.

## Revendications

1. Dispositif de lecture de compteur (100), comprenant :
- une première interface de communication (101) permettant la communication sans fil avec un compteur utilitaire (200) ;
- une seconde interface de communication (102) permettant la communication sans fil avec un téléphone mobile (300) ;
- un microcontrôleur (103) permettant de commander les interfaces de communication (101, 102) et de traiter des paquets de données (500) ; et
- un module d'extraction de clé (104),
le dispositif de lecture de compteur (100) étant configuré pour : recevoir du compteur utilitaire (200) via la première interface de communication (101), un paquet de données (500) comprenant une charge utile (505) étant au moins partiellement cryptée (501) à l'aide d'une clé de cryptage de données (521) ; et recevoir du téléphone mobile (300) via la seconde interface de communication (102) un code d'accès (520) comprenant la clé de cryptage de données (521) intégrée dans le code d'accès, et extraire du code d'accès (520) la clé de cryptage de données (521) en entrant le code d'accès dans le module d'extraction de clé (104) ; et décrypter la charge utile (505) du paquet de données reçu (500) en utilisant la clé de cryptage de données extraite du code d'accès ; et établir une connexion cryptée (522) au téléphone mobile (300) via la seconde interface de communication (102) et envoyer au moins une partie de la charge utile décryptée (502) au téléphone mobile via la connexion cryptée (522) et envoyer le paquet de données reçu (500), incluant la charge utile cryptée, au téléphone mobile (300) via la seconde interface de communication (102).

2. Dispositif de lecture de compteur selon la revendication 1, conçu en outre pour rétablir automatiquement la connexion cryptée (522) au téléphone mobile (300) lorsque le téléphone mobile rentre dans la portée de communication du dispositif de lecture de compteur (100) après avoir été en dehors de la portée de communication.

3. Dispositif de lecture de compteur selon l'une quelconque des revendications précédentes, dans lequel la clé de cryptage de données (521) est extraite du code d'accès (520) en entrant en outre une identification de compteur (506) dans le module d'extraction de clé (104) et dans lequel le paquet de données (500) reçu du compteur utilitaire (200) comprend en outre l'identification de compteur en texte clair.

4. Dispositif de lecture de compteur selon l'une quelconque des revendications précédentes, comprenant en outre une identification de dispositif de lecture de compteur (106), dans lequel la clé de cryptage de données (521) est extraite du code d'accès (520) en entrant en outre l'identification de dispositif de lecture de compteur dans le module d'extraction de clé (104).

5. Dispositif de lecture de compteur selon l'une quelconque des revendications précédentes, dans lequel le code d'accès (520) est généré à l'aide d'un procédé cryptographique de sorte que la clé de cryptage de données (521) soit intégrée dans le code d'accès (520) dans un format crypté et la clé de cryptage de données est extraite du code d'accès à l'aide d'un procédé cryptographique de sorte que la clé de cryptage de données extraite soit dans un format décrypté.

6. Dispositif de lecture de compteur selon l'une quelconque des revendications précédentes, comprenant en outre un stockage (105) tel qu'une zone de mémoire non volatile, et étant en outre agencé pour stocker les paquets de données cryptés reçus (500) et / ou la charge utile décryptée (502) dans le stockage et pour envoyer au moins une partie des données stockées au téléphone mobile (300) lorsqu'il se trouve à portée de communication.

7. Dispositif de lecture de compteur selon la revendication 6, conçu en outre pour rechercher des compteurs utilitaires (200) via la première interface de communication (101) et pour stocker des paquets de données (500) reçus d'un ou plusieurs compteurs utilitaires si la charge utile (505) en provenance de l'un ou plusieurs compteurs utilitaires est décryptée avec succès en utilisant la clé de cryptage de données (521).

8. Dispositif de lecture de compteur selon l'une quelconque des revendications 6 à 7, étant en outre conçu pour stocker les paquets de données cryptés reçus (500) en provenance d'un ou plusieurs compteurs utilitaires pour lesquels la charge utile (505) ne peut pas être décryptée avec succès.

9. Dispositif de lecture de compteur selon l'une quelconque des revendications 6 à 8, dans lequel le stockage (105) pour stocker au moins la charge utile décryptée (502) est un stockage sécurisé où les données sont stockées sous une forme cryptée ou dans une zone de mémoire cryptée.

10. Procédé de lecture d'un compteur utilitaire dans un système de lecture de compteur comprenant : un compteur utilitaire (200) ; un dispositif de lecture de compteur (100) ; un téléphone mobile (300) ; et un système de tête de réseau (400), dans lequel le dispositif de lecture de compteur (100) est conçu pour une communication sans fil avec le compteur utilitaire (200) via une première interface de communication (101) et pour une communication sans fil avec le téléphone mobile (300) via une seconde interface de communication (102) et dans lequel le téléphone mobile est conçu pour une communication avec le système de tête de réseau (400) via une communication cellulaire ou Wi-Fi (524),
le procédé comprenant les étapes de :
- envoi depuis le système de tête de réseau (400) au téléphone mobile (300) d'un code d'accès (520) comprenant une clé de cryptage de données intégrée (521), (601) ;
- envoi du code d'accès (520) depuis le téléphone mobile (300) au dispositif de lecture de compteur (101) via la seconde interface de communication (102), (602) ;
- réception dans le dispositif de lecture de compteur (100) en provenance du compteur utilitaire (200) via la première interface de communication (101), d'un paquet de données (500) comprenant une charge utile (505) au moins partiellement cryptée à l'aide de la clé de cryptage de données (521), (603) ;
- extraction dans le dispositif de lecture de compteur (100) de la clé de cryptage de données (521) à partir du code d'accès (520), (604) ;
- décryptage dans le dispositif de lecture de compteur (100) de la charge utile (505) du paquet de données reçu (500) à l'aide de la clé de cryptage de données extraite du code d'accès (605) ;
- établissement d'une connexion cryptée (522) entre le dispositif de lecture de compteur (100) et le téléphone mobile (300) via la seconde interface de communication (102), (606) ;
- envoi d'au moins une partie de la charge utile décryptée (502) du dispositif de lecture de compteur (100) au téléphone mobile (300) via la connexion cryptée (522), (607) ;
- envoi du paquet de données (500) incluant la charge utile cryptée (501) reçue dans le dispositif de lecture de compteur (100) au téléphone mobile (300) via la seconde interface de communication (102), (608) ;
- affichage sur un afficheur (301) du téléphone mobile (300) des données de charge utile décryptées (502) reçues du dispositif de lecture de compteur (609) ; et
- envoi à partir du téléphone mobile (300) au système de tête de réseau (400) via une communication cellulaire ou Wi-Fi (524) du paquet de données crypté (500) reçu du dispositif de lecture de compteur (610).

11. Procédé selon la revendication 10, comprenant en outre les étapes de :
- envoi depuis le téléphone mobile (300) au système de tête de réseau (400) d'une demande de code d'accès (520) via une application utilisateur dans le téléphone mobile ;
- génération dans le système de tête de réseau du code d'accès sur la base, au moins, de la clé de cryptage de données (521) ; et
- réception dans le téléphone mobile (300) du code d'accès (520) en provenance du système de tête de réseau (400) via un canal secondaire (523).

12. Procédé selon la revendication 11, dans lequel le canal secondaire (523) est l'un parmi : un SMS, un e-mail ou un appel téléphonique.

13. Procédé selon l'une quelconque des revendications 10 à 12, dans lequel la clé de cryptage de données (521) est extraite du code d'accès (520) dans le dispositif de lecture de compteur (100) en entrant le code d'accès et au moins une identification de compteur (506) dans un module d'extraction de clé (104) et le paquet de données (500) comprend en outre une identification de compteur (506) en texte clair.

14. Procédé selon l'une quelconque des revendications 10 à 13, dans lequel la clé de cryptage de données (521) est extraite du code d'accès (520) dans le dispositif de lecture de compteur (100) en entrant au moins le code d'accès et une identification de dispositif de lecture de compteur (106) dans un module d'extraction de clé (104), le procédé comprenant en outre les étapes de :
- lecture avec le téléphone mobile (300) de l'identification du dispositif de lecture de compteur (106) à partir du dispositif de lecture de compteur soit par une interface optique telle qu'un code à barres ou un code QR, soit via NFC ;
- inclusion de l'identification du dispositif de lecture du compteur dans la demande du code d'accès ;
- génération dans le système de tête de réseau (400) du code d'accès (520) sur la base, au moins, de la clé de cryptage de données (521) et de l'identification de dispositif de lecture de compteur (106).

15. Procédé selon l'une quelconque des revendications 10 à 14, dans lequel le code d'accès (520) est généré à l'aide de procédés cryptographiques de sorte que la clé de cryptage de données (521) soit intégrée dans le code d'accès dans un format crypté et la clé de cryptage de données est extraite du code d'accès à l'aide de procédés cryptographiques de sorte que la clé de cryptage de données extraite soit dans un format décrypté.
